Europäisches Patentamt

**European Patent Office**

**Office européen des brevets**

(11) Numéro de publication: **0 040 999**
**A1**

# DEMANDE DE BREVET EUROPEEN

(21) Numéro de dépôt: **81400707.6**

(51) Int. Cl.³: **H 04 N 5/21**

(22) Date de dépôt: **05.05.81**

(30) Priorité: **28.05.80 FR 8011799**

(43) Date de publication de la demande: **02.12.81**
**Bulletin 81/48**

(84) Etats contractants désignés: **DE GB IT NL SE**

(71) Demandeur: **THOMSON-CSF, 173, Boulevard Haussmann, F-75360 Paris Cedex 08 (FR)**

(72) Inventeur: **Trahand, Jean-Pierre, THOMSON-CSF SCPI 173, bld Haussmann, F-75360 Paris Cedex 08 (FR)**
Inventeur: **Voisin, Gérard, THOMSON-CSF SCPI 173, bld Haussmann, F-75360 Paris Cedex 08 (FR)**

(74) Mandataire: **Trocellier, Roger et al, "THOMSON-CSF" - SCPI 173, bld Haussmann, F-75360 Paris Cedex 08 (FR)**

(54) **Circuit de traitement de signaux vidéo de télévision, et caméra équipée d'un tel circuit.**

(57) Circuit permettant d'éliminer pratiquement les signaux parasites du type dûs à la microphonie.

Il cimporte un circuit de reconstitution du signal parasite procédant par échantillonnage lors des suppressions ligne et soustraction, alimenté en boucle ouverte (S1) ou fermée (S3), et constitué par un premier circuit (12) constituant un filtre bloqueur d'ordre O connecté en série avec un deuxième circuit (13) pour former ensemble un filtre bloqueur d'ordre $\underline{n}$ (n>1), les sorties de ces circuits alimentant une première entrée d'un montage amplificateur différentiel (11) qui reçoit par son autre entrée le signal video (S1) à traiter.

L'invention s'applique notamment aux caméras de prise de vue de télévision.

# CIRCUIT DE TRAITEMENT DE SIGNAUX VIDEO DE TELEVISION ET CAMERA EQUIPEE D'UN TEL CIRCUIT.

La présente invention concerne un circuit de traitement de signaux video de télévision en vue de l'élimination de signaux parasites du type microphonie.

Lorsque l'on fait subir des vibrations ou des chocs à une caméra de prise de vues de télévision, la grille de champ située près de la cible photosensible vibre et la variation de la capacité formée entre ces deux éléments introduit un courant de cible parasite à la fréquence du phénomène vibratoire. Ce défaut est désigné par le terme microphonie.

Une réduction de la microphonie des tubes est obtenue par l'utilisation de tubes renforcés (type militaire) et, plus particulièrement, par une réalisation plus soignée de la grille de champ au moyen de fils plus tendus pour réduire l'amplitude des oscillations et accroître la fréquence de résonnance de la grille. Cette fréquence peut par exemple être portée à 2KHz au lieu de 4 à 500 Hz . L'inconvénient majeur est l'accroissement du coût de fabrication du tube. Cette solution ne résoud d'ailleurs pas le problème car elle ne diminue pas suffisamment les effets de ces signaux parasites.

Le traitement du signal video comporte un alignement du signal à un niveau continu de référence, en général le niveau zéro, durant les intervalles de suppression ligne pendant lesquels le faisceau cathodique est bloqué. Durant ces intervalles de blocage du faisceau le courant cible correspond alors à celui de microphonie. L'alignement (clamping selon l'appellation anglo-saxonne) réduit en fait le bruit dû à la microphonie mais présente deux inconvénients : l'introduction d'un bruit basse fréquence dû aux signaux parasites sur les paliers de suppressions et un bruit résiduel de microphonie plus sensible vers le côté droit de l'image.

L'invention a pour but de remédier aux divers inconvénients précités en éléminant pratiquement le bruit de microphonie par un traitement électronique du signal. L'un des avantages est de permettre l'utilisation de tubes de séries ordinaires (type civil) et donc moins onéreux, dans des applications ou une immunité aux vibrations s'avère nécessaire ; c'est le cas notamment pour des caméras aéroportées à bord d'avions, de missiles, de systèmes de désignation d'objectif par laser, etc....

Suivant une caractéristique de l'invention, le circuit de traitement video comporte un circuit de reconstitution du signal parasite procédant par échantillonnage du signal video lors des suppressions de ligne et un circuit soustracteur pour soustraire le signal parasite reconstitué du signal video, le circuit de reconstitution utilisant la technique des filtres bloqueurs pour délivrer un signal fonction de l'amplitude d'au moins deux des derniers échantillons prélevés et qui de ce fait varie avec la variable temps entre chaque intervalle d'échantillonnage.

Les particularités et avantages de la présente invention apparaîtront dans la description qui suit à l'aide des figures annexées qui représentent :

- Fig.1, un diagramme général d'une caméra de télévision équipée d'un circuit de traitement conforme à l'invention ;

- Fig.2, des formes d'ondes relatives au signal video et au bruit parasite dû à la microphonie ;

- Fig.3, un diagramme du circuit de traitement selon l'invention ;

- Figs 4a et b, des formes d'ondes montrant le signal de reconstitution dans le cas d'un échantillonnage par filtre bloqueur d'ordre 0 et d'ordre 1 respectivement ;

- Fig.5, un exemple de réalisation d'un filtre bloqueur d'ordre 0 ;

- Fig.6, des signaux de synchronisation utilisés pour l'échantillonnage ;

- Fig.7, un exemple de réalisation du circuit de traitement à l'aide d'un filtre bloqueur d'ordre 1 ; et

- Fig.8, un exemple de réalisation du circuit de traitement à l'aide d'un filtre bloqueur d'odre 2.

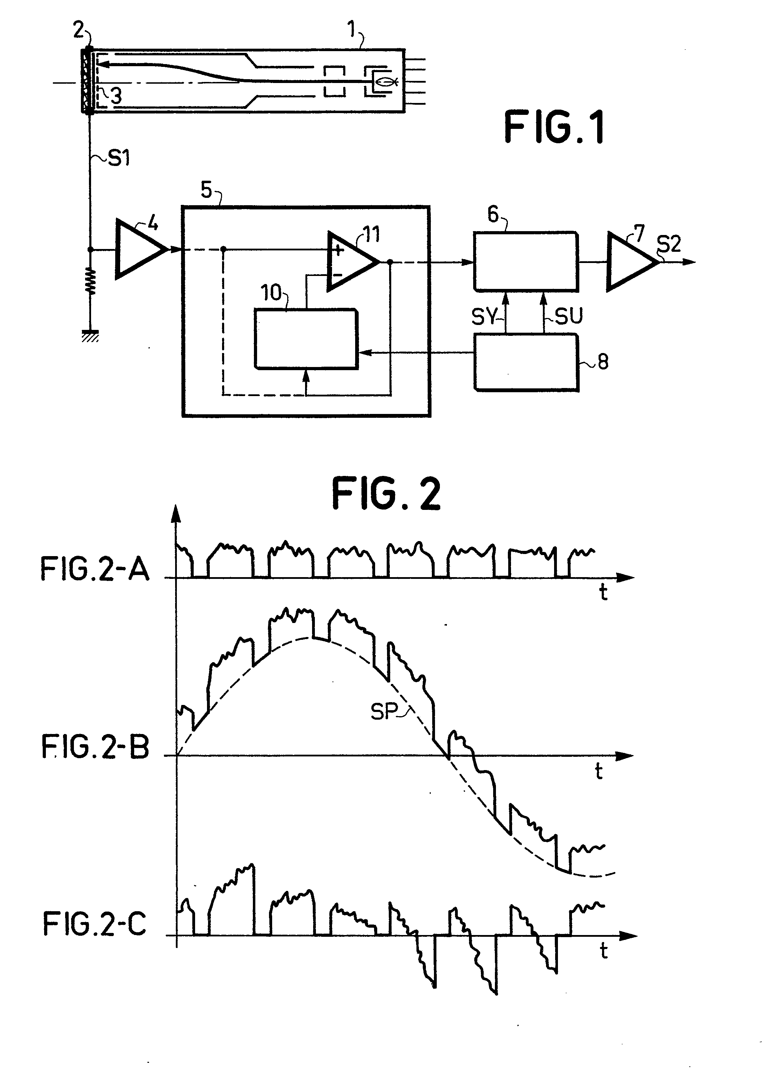

Sur la Fig.1, un tube 1 du type Vidicon est représenté sans ses bobines de déviation, de concentration et d'alignement, ni l'optique de focalisation qui précède la cible 2. Les différentes électrodes sont visibles à l'intérieur du tube, l'électrode 3 dite grille de champ étant principalement responsable du phénomène de microphonie.

Le signal video S1 récupéré sur l'électrode de cible est appliqué à un circuit préamplificateur 4 suivi d'un circuit de traitement 5 avant introduction des signaux mélangés de suppression SU et de synchro SY, ligne et trame dans un circuit mélangeur 6. Cette chaîne conventionnelle se termine par un amplificateur de sortie 7 qui produit une adaptation d'impédance pour la transmission en aval du signal video composite S2 vers l'exploitation. Le circuit 8 élabore les divers signaux de synchronisation. La caméra comporte en outre un circuit générateur des signaux de balayage non figuré.

Le circuit de traitement objet de l'invention,

4

se situe dans le bloc 5. Il comporte un circuit de reconstitution 10 du signal parasite de microphonie à partir de ses valeurs aux instants de suppression ligne et un circuit différentiel 11 pour le soustraire au signal video. Le circuit peut travailler en boucle fermée comme représenté, le signal video étant prélevé en sortie du soustracteur 11, ou en boucle ouverte (liaison en pointillé), le signal video étant prélevé à l'entrée video du circuit soustracteur 11.

La Fig.2a montre le signal video S1 en l'absence de signal parasite de microphonie et la Fig.2b ce même signal en présence de microphonie représentée par une modulation sinusoïdale SP à la fréquence des vibrations. En l'absence de traitement particulier, après alignement au niveau désiré, le signal video présente l'allure de la Fig.2c qui met en relief la subsistance d'un bruit parasite dû à la microphonie. C'est ce bruit qui est éliminé avec une certaine précision par le traitement proposé.

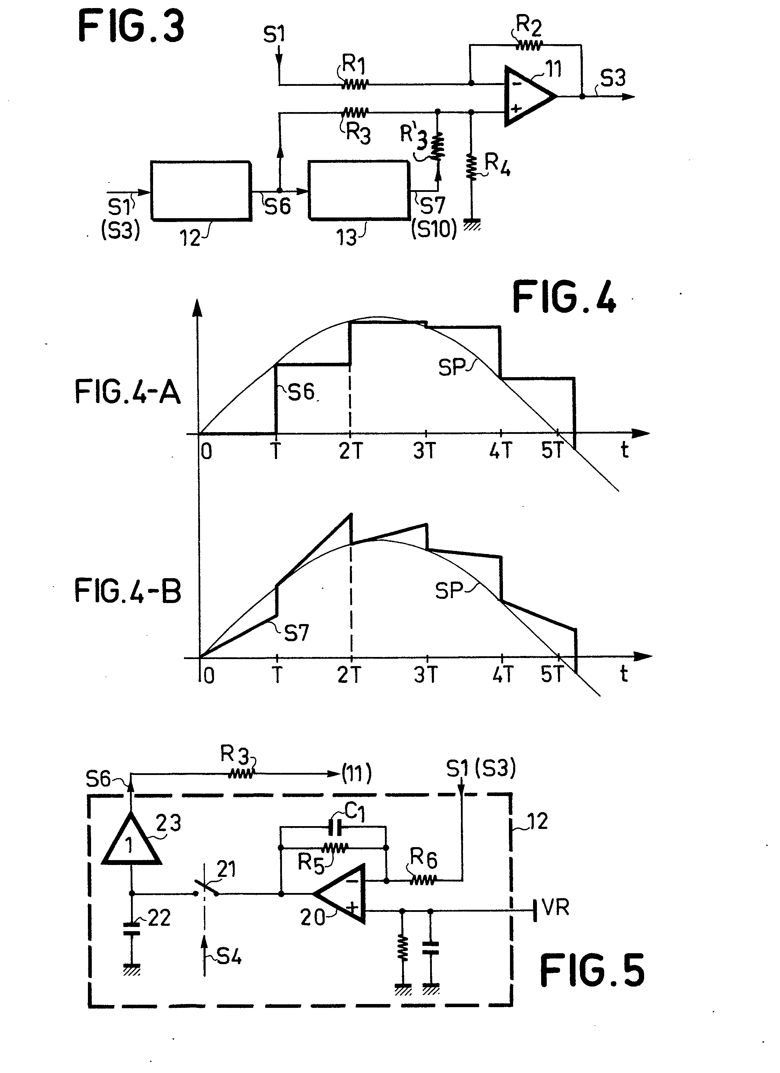

Suivant la Fig.3, le circuit de reconstitution est formé de deux circuits 12 et 13 . Le circuit 12 reçoit le signal video S1 en boucle ouverte, ou S3 en boucle fermée, et alimente à travers une résistance R3 une entrée d'un amplificateur opérationnel 11 monté en soustracteur. Le circuit 12 constitue un filtre bloqueur d'ordre 0. Le circuit 13 est alimenté par le circuit 12 et sa sortie est connectée à la même entrée du circuit 11 à travers la résistance R'3 constituant avec R3 un sommateur . L'ensemble 12-13 constitue un filtre bloqueur d'ordre $\underline{n}$ avec $\underline{n}$ au moins égal à 1. En ce qui concerne la technique des filtres bloqueurs, on pourra se rapporter notamment au document "Systèmes et Asservissements linéaires échantillonnés" par Y. SEVELY édité par DUNOD Paris en 1969, pages 38 et suivantes. Comme il apparaîtra dans ce qui suit, la fidélité de la reconstitution et consécutivement la précision obtenue sont liées à l'ordre n choisi mais, compte tenu d'un accroissement rapide de la complexité de réalisation, la description est réstrainte au cas n=1 qui donne une précision moyenne et au cas n=2 qui se traduit par une excellente précision pouvant satisfaire les cas délicats.

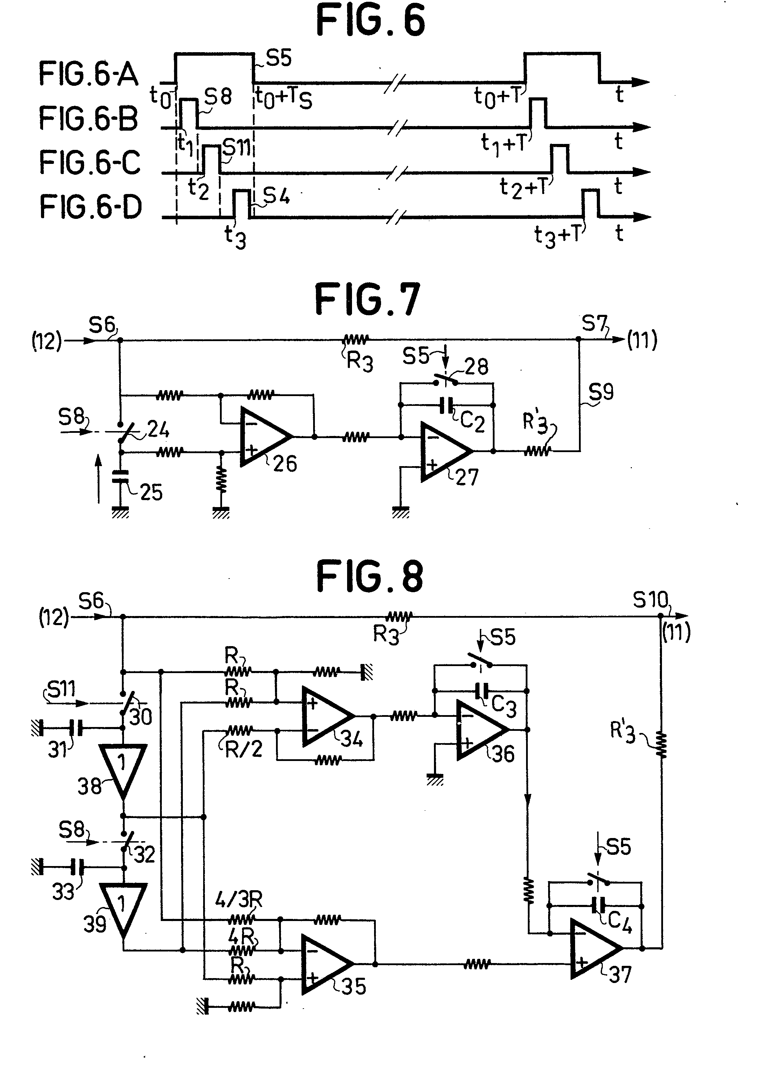

Le circuit filtre bloqueur d'ordre 0 peut être constitué au moyen d'un circuit différentiel recevant le signal video et un niveau continu de référence VR, par exemple le niveau zéro, et délivrant le signal différence entre ces valeurs. La sortie est ensuite filtrée pour récupérer la composante continue et l'appliquer à un circuit échantillonneur-bloqueur. La Fig.5 en donne un exemple de réalisation et la Fig.4a illustre le fonctionnement. Le circuit 12 comporte un circuit amplificateur opérationnel 20 monté en différentiel et filtre passe-bas . La fréquence de coupure,peut être déterminée par exemple de 1 à 2 MHz et est obtenue par le choix des éléments C1, R5 et R6. Le circuit échantillonneur-bloqueur est symbolisé par un commutateur 21 et une mémoire 22. Le commutateur 21 est commandé périodiquement à la fermeture à la fréquence ligne 1/T par un signal impulsionnel S4 (Fig.6d) produit durant l'intervalle TS de suppression ligne (signal S5 Fig.6a), de préférence vers la fin de cet intervalle.La mémoire 22 peut consister en en une capacité dont la charge correspond à la valeur du signal parasite SP jusqu'au prélèvement de l'échantillon suivant. Le signal S6 correspondant à l'information mémorisée peut s'écrire sous la forme :

$$F_o = (t + nT) = F_p (nT)$$

où nT sont les instants de suppression, $F_p$ le signal

parasite, et $0 \leqslant t < T$. Le circuit 23 est un amplificateur de gain 1, à faible impédance de sortie et à haute impédance d'entrée. Le signal vidéo traité S3 se trouve aligné au niveau VR lors des suppressions.

La Fig.7 représente une réalisation du circuit complémentaire 13 de la Fig.3 pour constituer avec le circuit 12 un filtre bloqueur d'ordre 1 et obtenir une réponse de la forme :

$$F_1(t+nT) = F_p (nT) + \frac{t}{T} [F_p(nT) - F_p(n-1)T]$$

et qui est représentée par le signal S7 sur la Fig.4b. Le circuit comporte un circuit échantillonneur-bloqueur 24-25, le commutateur 24 étant commandé à la période ligne par un signal impulsionnel S8 (Fig.6b) produit durant la suppression de ligne, au début de l'intervalle de suppression et dont la fin précède le début de l'impulsion S4 qui commande le circuit 12. Ainsi la capacité 25 enregistre l'information $F_p(n-1)T$. Un circuit différentiel 26 élabore ensuite la différence

$$F_p(nT) - F_p(n-1)T$$

et sa sortie est appliquée à un montage intégrateur 27. La capacité d'intégration C2 de ce montage est mise en court circuit par un commutateur 28 commandé par le signal de suppression ligne S5. Ainsi la sortie S9 de l'intégrateur correspond à la valeur

$$\frac{t}{T} [F_p (nT) - F_p (n-1) T] .$$

On peut se rendre compte aisément au vu des Figs. 4a et 4b que le signal reconstitué va se rapprocher d'autant plus du signal parasite SP que l'ordre n du filtre bloqueur sera élevé. La Fig.8 donne un exemple de réalisation du circuit 13 pour $\underline{n} = 2$ , la réponse étant de la forme :

$$F_2 (t+nT) = F_p(nT) + \frac{t}{T} [\frac{3}{2} F_p(nT) - 2F_p(n-1)T + \frac{1}{2} F_p(n-2)T] +$$

$$(\frac{t}{T})^2 [\frac{1}{2} F_p(nT) - F_p(n-1)T + \frac{1}{2} F_p(n-2)T]$$

pour le signal global S10 délivré vers le circuit différentiel 11. La variation introduit cette fois, en sus d'un terme en t, un terme en $t^2$ de la variable temps, et fait intervenir les trois derniers échantillons à (n-2)T, (n-1)T et (nT) au lieu des deux derniers. De manière généralisée, le montage d'ordre $\underline{n}$ donne une réponse avec des termes en $t^0$, $t^1$, $t^2$,... $t^n$ et des coefficients se rapportant au (n+1) derniers échantillons, d'où l'accroissement de la fidélité de la reconstitution avec $\underline{n}$ . Dans le même sens, l'erreur $V_{\varepsilon n}$ entre le signal reconstitué et le signal parasite peut s'exprimer par la relation :

$$V_{\varepsilon n} = [2 \sin \frac{\omega T}{2}]^{n+1}$$

ou $\omega$ représente la pulsation de l'onde parasite SP. Le montage suivant la Fig.8 comporte deux circuits échantillonneur - bloqueur 30-31 et 32-33 , commandés respectivement par les impulsions S11 (Fig.6c) et S8 (Fig.6b), l'impulsion S11 étant produite entre la fin de S8 et le début de l'impulsion S4 qui commande le circuit 12. Ainsi Ainsi la charge de la capacité 22 va se trouver successivement reportée en 31 puis en 33 au cours de deux périodes et l'on dispose des échantillons nT, (n-1)T et (n-2)T respectivement. Les circuits en aval comportent

0040999

8

deux voies avec chacune un amplificateur différentiel 34 (35) et un intégrateur 36 (37). Les intégrateurs sont comme dans le cas du circuit 27 de la Fig.7 remis à zéro et rendus innopérants durant chaque intervalle de suppression ligne par le signal S5. La sortie de l'intégrateur 36 attaque l'intégrateur 37 pour former le terme en $t^2$ . Les éléments résistifs impliqués dans des sommations sont indiqués avec leur valeur relative en accord avec la formulation $F_2(t+nT)$ précitée. Les amplificateurs 38 et 39 de gain 1 produisent une adaptation à basse impédance.

A titre indicatif, pour des signaux video de télévision correspondant au standard 625 lignes ($T=52\mu s$) délivrés par un tube de série courante dont la fréquence de résonnance de la grille de champ est inférieure à 800 Hz, l'atténuation du bruit parasite de microphonie est, pour 500Hz par exemple, supérieure à 32dB avec un filtre d'ordre 2, ce qui autorise une exploitation normale de l'image.

Les signaux de commande représentés sur la fig.6 sont élaborés par le circuit de synchronisation, les signaux S8 et S4 peuvent correspondre respectivement au signal de synchronisation ligne et au signal d'alignement au niveau du noir, le signal S11 pouvant être déduit du signal S8 par retard. Les commutateurs 21, 24, 31, 33 peuvent être réalisés avec des transistors à effet effet de champ.

Le circuit de traitement décrit s'applique à toutes les caméras soumises à un environnement mécanique s'évère. Outre l'avantage de pouvoir utilise des tubes de prise de vue de type courant, l'accroissement résultant de la fréquence de coupure basse de la chaîne videofréquence permet de concevoir des circuits d'alignement, d'expansion de contraste et de contrôle automatique de luminosité, à réponse rapide pour traiter les signaux de tubes de prise de vues de télévision, vidicons et autres.

Le circuit de traitement peut s'appliquer par ailleurs, notamment pour appurer un signal video-fréquence transmise par câble à longue distance.

REVENDICATIONS

1 - Circuit de traitement de signaux video de télévision d'une caméra pour éliminer le signal parasite dû à la microphonie du tube de prise de vues, le circuit de traitement utilisant des moyens de filtrage et étant caractérisé en ce qu'il comporte un circuit de reconstitution (10) du signal parasite (SP) procédant par échantillonnage du signal video durant les suppressions ligne, un échantillon [$F_p(nT)$] étant prélevé durant chaque suppression ligne (S5), et un circuit soustracteur (11) pour soustraire le signal reconstitué [$F_n(t+nT)$] du signal video (S1-S3), le circuit de reconstitution comportant les moyens de filtrage sous forme d'un circuit filtre bloqueur d'ordre n, avec n au moins égal à 1, pour produire un signal reconstitué fonction de l'amplitude des n+1 derniers échantillons prélevés, et variable dans le temps entre deux suppressions ligne successives.

2 - Circuit selon la revendication 1, caractérisé en ce que le circuit de reconstitution (10) est monté en boucle ouverte, recevant le signal video (S1) appliqué simultanément à une première entrée du circuit soustracteur.

3 - Circuit selon la revendication 1, caractérisé en ce que le circuit de reconstitution (10) est monté en boucle fermée, étant alimenté par la sortie (S3) du circuit soustracteur, lequel reçoit le signal video à traiter (S1) sur une première entrée.

4 - Circuit selon la revendication 2 ou 3, caractérisé en ce que le circuit de reconstitution se compose d'un premier circuit (12) connecté par sa sortie à une deuxième entrée du circuit soustracteur (11), et un deuxième circuit (13) alimenté par la sortie (S6) du premier circuit et connecté en sortie également à la seconde entrée du circuit soustracteur, le premier circuit formant un filtre bloqueur d'ordre 0 et l'ensemble des deux circuits formant le filtre bloqueur d'ordre n.

5 - Circuit selon la revendication 4, caractérisé en ce que le circuit soustracteur est constitué par un montage amplificateur différentiel et que les premier et deuxième circuits sont connectés chacun à travers une résistance (R3, R'3) aboutissant à la seconde entrée.

6 - circuit selon la revendication 4 ou 5, caractérisé en ce que le premier circuit comporte un amplificateur différentiel pour obtenir la valeur du signal video (S1, S3) par rapport à un niveau de référence (VR), un filtre passe-bas (20) pour filtrer la composante continue, et un circuit échantillonneur-bloqueur (21, 22) commandé à la fin de chaque suppression ligne pour mémoriser la valeur de l'échantillon $[F_p(nT)]$ correspondant.

7 - Circuit selon l'une quelconque des revendications 4 à 6, caractérisé en ce que le deuxième circuit (13) comporte en série, dans le cas d'un filtre bloqueur d'ordre 1, un circuit échantillonneur-bloqueur (24, 25) commandé au début de chaque suppression ligne pour mémoriser la valeur de l'échantillon $[F_p(n-1)T]$ correspondant, un montage amplificateur différentiel (26) et un montage intégrateur (27) remis à zéro durant chaque suppression ligne, en sorte de produire un signal reconstitué de la forme :

$$F_1(t+nT) = F_p(nT) + \frac{t}{T}[F_p(nT) - F_p(n-1)T]$$

avec $0 \leqslant t \leqslant T$, nT représentant les instants de suppression et $F_p$ le signal parasite.

8 - Circuit selon l'une quelconque des revendications 4 à 6, caractérisé en ce que le deuxième circuit (13) comporte, dans le cas d'un filtre bloqueur d'ordre 2, deux circuits échantillonneurs-bloqueurs (30, 31 et 32, 33) commandés successivement au début de chaque suppression ligne pour mémoriser respectivement les valeurs

des échantillons $[F_p(n-2)T]$ et $[F_p(n-1)T]$ correspondants, chaque circuit échantillonneur-bloqueur étant suivi d'un montage amplificateur différentiel (34, 35) puis d'un montage intégrateur (36, 37) remis à zéro durant chaque suppression ligne, l'ensemble étant agencé pour produire un signal reconstitué de la forme :

$$F_2(t + nT) = F_p(nT) + \frac{t}{T} [\frac{3}{2} F_p(nT) - 2F_p(n-1)T + \frac{1}{2} F_p(n-2)T]$$

$$+ (\frac{t}{T})^2 [\frac{1}{2} F_p(nT) - F_p(n-1)T + \frac{1}{2} F_p(n-2)T]$$

avec $0 \leqslant t \leqslant T$, $nT$ représentant les instants de suppression et $F_p$ le signal parasite.

9 - Circuit selon l'une quelconque des revendications 1 à 8, équipant une caméra de prise de vues de télévision et situé dans un ensemble de traitement (5) interposé entre le circuit préamplificateur video (4) et le circuit mélangeur (6) du signal video traité avec les signaux de synchronisation et de suppression.

FIG.1

FIG. 2

FIG.2-A

FIG.2-B

FIG.2-C

# FIG.3

# FIG.4

## FIG.4-A

## FIG.4-B

# FIG.5

# FIG. 6

FIG.6-A

FIG.6-B

FIG.6-C

FIG.6-D

# FIG. 7

# FIG. 8

## Office européen
### des brevets

# RAPPORT DE RECHERCHE EUROPEENNE

0040999

Numéro de la demande

EP 81 40 0707

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | FR - A - 2 111 786 (SIEMENS) <br> * Page 14, revendication 1 * <br><br> ---- | 1 | H 04 N 5/21 |

**DOMAINES TECHNIQUES RECHERCHES (Int. Cl.³)**

H 04 N 5/21
       5/34

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| Le présent rapport de recherche a été établi pour toutes les revendications | | |
|---|---|---|
| Lieu de la recherche <br> La Haye | Date d'achèvement de la recherche <br> 08-07-1981 | Examinateur <br> SIX |